# EUROPÄISCHE PATENTSCHRIFT

(11) **EP 1 036 505 B1**
(45) Veröffentlichungstag und Bekanntmachung des Hinweises auf die Patenterteilung: **07.12.2005**
(21) Anmeldenummer: 00105758.7
(22) Anmeldetag: 17.03.2000
(51) Int. Cl.: A23D 7/00

(54) **Margarinezubereitung und Verfahren zu ihrer Herstellung**
Margarine and process for preparing same
Margarine et procédé pour sa préparation

(30) Priorität: 18.03.1999 DE 19912215
(43) Veröffentlichungstag der Anmeldung: 20.09.2000
(73) Patentinhaber: Walter Rau, Lebensmittelwerke GmbH & Co. KG, 49176 Hilter (DE)
(72) Erfinder: Bölsche, Uwe, Dr., 33790 Halle / W. (DE)
(74) Vertreter: Eisenführ, Speiser & Partner

(56) Entgegenhaltungen:
- EP-A- 0 501 758
- EP-A- 0 897 671
- EP-A- 0 898 896
- WO-A-96/38047
- GB-A- 1 440 181
- GB-A- 2 229 077
- DATABASE WPI Section Ch, Week 198618 Derwent Publications Ltd., London, GB; Class D13, AN 1986-117166 XP002012415 -& JP 61 058536 A (NIPPON OILS & FATS CO LTD), 25. März 1986 (1986-03-25)
- DATABASE WPI Section Ch, Week 199516 Derwent Publications Ltd., London, GB; Class D13, AN 1995-121511 XP002141298 & RU 2 018 232 C (MOSC MASLOZHIRPROM RES PRODN ASSOC), 30. August 1994 (1994-08-30)

## Beschreibung

Die Erfindung betrifft eine Margarinezubereitung sowie ein Verfahren zu ihrer Herstellung.

Margarine ist eine üblicherweise bei Raumtemperatur streichfähige Wasser-in-Öl-Emulsion mit einem Fettgehalt von 80%. Die Fettphase der Margarine besteht aus Fett und Öl, wobei das Öl pflanzlichen Urspungs ist, während das Fett in der Regel entweder umgeestertes oder hydriertes pflanzliches Fett oder gegebenenfalls hydriertes tierisches Fett ist. Die Margarine soll eine solche Konsistenz aufweisen, daß sie bei Raumtemperatur eine glatte weiche Textur hat und im Mund ein zartschmelzendes Gefühl hinterläßt, ohne sandig oder anderweitig inhomogen zu erscheinen.

Ursprünglich wurde die Margarine entwickelt als billiger Ersatz für Butter. Inzwischen hat sich jedoch die Bedeutung dieses "Ersatzfettes" hin zu einem Produkt für gesundheitsbewußte Verbraucher verschoben. In den letzten Jahrzehnten haben die gesundheitlichen Probleme in der Bevölkerung mit zu hohem Cholesteringehalt und Übergewicht stark zugenommen. Fettzubereitungen, die nicht nur organoleptisch befriedigend sind, sondern auch einen reduzierten Fettgehalt aufweisen, kommt daher immer größere Bedeutung zu. Derartige Margarinezubereitungen werden z.B. als Viertelfett-, Halbfett- und Dreiviertelfettmargarine, die 20, 40 bzw. 60 Gew.-% Fett enthalten, in den Verkehr gebracht.

Wenn der Fettgehalt gesenkt wird, treten Probleme auf, die sich bei Vollfett-Margarine nicht stellen. Margarine mit einem Fettgehalt von 80 Gew.-% hat eine geringe Wasseraktivität und ist daher mikrobiologisch so stabil, daß keine Konservierungsmittel zugesetzt werden müssen. Außerdem kann die Konsistenz durch eine geeignete Kombination von Fett und Öl in gewünschter Weise eingestellt werden. Bei Zubereitungen mit einem geringeren Fettgehalt, insbesondere bei Zubereitungen mit einem Fettgehalt von 40 Gew.-% und weniger, ist einerseits die Anfälligkeit für mikrobielles Wachstum stark erhöht. Je höher der Wasseranteil ist, desto größer ist die Gefahr eines Keimwachstums, insbesondere von unerwünschten pathogenen Mikroorganismen, selbst bei Verwendung von Konservierungsmitteln. Andererseits wird es umso schwieriger, die gewünschte Textur und Konsistenz des Produktes nachhaltig und stabil einzustellen, je niedriger der Fettgehalt ist. Die Emulsionsstabilität wird reduziert und auch die sensorischen Eigenschaften können abfallen.

Um diese Probleme zu lösen, wurden verschiedene Lösungen vorgeschlagen, die jedoch alle mit Nachteilen behaftet sind. So wurde für den Fettanteil einer Margarinezubereitung mit geringerem Fettgehalt gehärtetes Fett eingesetzt, das eine Gerüststruktur bilden kann, die dann die gewünschte Konsistenz und Textur liefert. Der Nachteil bei der Verwendung gehärteter Fette besteht darin, daß bei der Härtung trans-Fettsäuren entstehen, die aus physiologischen Gründen unerwünscht sind. Außerdem können Zubereitungen, die gehärtete Fette als Gerüstfette in Kombination mit Öl enthalten, ein schlechteres Mundgefühl aufweisen, d.h. sie schmelzen schlecht und hinterlassen beim Verzehr einen talgigen Eindruck.

Weiterhin wird in European Journal of Clinical Nutrition, 1998, 52, 334-343 beschrieben, daß durch Zusatz von Sterinpräparaten zu Margarine (72% Fett) eine signifikante Senkung des Cholesterinspiegels bewirkt werden kann, nicht aber mit einer oryzanolhaltigen Margarine, da aufgrund technologischer Schwierigkeiten die Einarbeitung wirksamer Mengen nicht gelang.

Außerdem ist es aus den Europäischen Patentanmeldungen EP-A0 897 671 und EP-A 0 898 896 bekannt, umgeesterte Sterinpräparate als Gerüstmaterial zu verwenden. Zum einen ist die Verwendung der aufwendig herzustellenden Sterinpräparate unwirtschaftlich. Zum anderen ist bei Zubereitungen mit reduziertem Fettgehalt die Verwendung von Konservierungsmitteln notwendig, um die Produkte stabil zu halten.

Es war nun eine Aufgabe der Erfindung, eine Margarinezubereitung bereitzustellen, die einen reduzierten Kaloriengehalt aufweist und darüberhinaus beim Verzehr nicht nur den Cholesterinspiegel nicht erhöht, sondern ihn sogar noch absenkt.

Es war eine weitere Aufgabe der vorliegenden Erfindung, Zubereitungen bereitzustellen, die die oben genannten Nachteile nicht aufweisen, keine gehärteten Fette zur Stabilisierung benötigen, auch ohne Verwendung von Konservierungsstoffen mikrobiologisch stabil sind, vergleichsweise hohe Anteile an mehrfach ungesättigten Fettsäuren und natürlichem Oryzanol und/oder anderen Phytosterinen aufweisen können und auch mechanische und thermische Belastungen aushalten.

Diese Aufgaben werden mit der in den Ansprüchen beschriebenen Margarinezubereitung gelöst.

Erfindungsgemäß wird eine Wasser-in-Öl-Zubereitung zur Verfügung gestellt, die neben den üblichen Inhaltsstoffen, Fett, Wasser, ein Hydrokolloid, ausgewählt aus Pektin und/oder Derivaten davon, Carrageen, und/oder Derivaten davon, Alginsäure und/oder Derivaten davon oder deren Mischungen, übliche Zusatzstoffe und ein oryzanolhaltiges Präparat enthält, wobei die Zubereitung einen pH-Wert kleiner 3,7 aufweist.

Ein erfindungswesentlicher Bestandteil der vorliegenden Margarinezubereitung ist die Einarbeitung eines oryzanolhaltigen Präparates, das als cholesterinsenkendes Mittel der Margarinezubereitung zugefügt wird. Der Name Oryzanol bezeichnet eine Gruppe von Ferulasäureestern verschiedener Triterpenylalkohole, die in Pflanzen gefunden werden. Von den drei bekannten Varianten α-Oryzanol, β-Oryzanol und γ-Oryzanol, wird am häufigsten γ-Oryzanol verwendet, das Sterylferulate mit Schmelzpunkten im Bereich von 150 bis 170°C enthält, abhängig von der genauen Zusammensetzung des Triterpenalkoholrestes. Die Hauptkomponenten von γ-Oryzanol sind Cycloartenol und 24-Methylencycloartanol. γ-Oryzanol ist in Keim- und Schalenölen von Getreidepflanzen enthalten und ist z.B. neben freien Sterinen und Tootrienolen ein Bestandteil der unverseifbaren Fraktion im Reisschalenöl, in dem es in einem Anteil von bis zu etwa 4 Gew.-% vorhanden ist. Für die erfindungsgemäße Zubereitung wird das Oryzanol im natürlichen Zustand eingesetzt, d.h. es muß weder geschmolzen noch verseift noch umgeestert werden.

Ein erfindungsgemäß bevorzugtes Oryzanolpräparat ist daher Reisschalenöl oder Reiskeimöl. Bevorzugt wird ein Reisschalen- oder Keimöl verwendet, dessen Anteil an Unverseifbarem angereichert wurde, um einen höheren Anteil an γ-Oryzanol, freien Sterinen und Tocotrienolen zu erhalten. Es ist auch möglich, das γ-Oryzanol aus Reisöl oder anderen pflanzlichen Quellen zu isolieren und dann das gewonnene γ-Oryzanol als reines Oryzanolpräparat für die erfindungsgemäße Margarinezubereitung einzusetzen.

Das Oryzanolpräparat wird der erfindungsgemäßen Margarinezubereitung in einer solchen Menge zugesetzt, daß die Zubereitung bezogen auf Gewicht 1 bis 15% Oryzanol enthält. Da das als Oryzanolpräparat bevorzugt eingesetzte, an Unverseifbarem angereicherte Reisschalenöl neutral im Geschmack ist, gibt es keine Probleme mit Anteilen von bis zu 15 Gew.-% im Hinblick auf die sensorischen Eigenschaften. Ein Anteil von unter 1 Gew.-% ist bei den üblicherweise verzehrten Mengen an Emulsionsfetten zu gering, um noch erheblichen Einfluß auf den Cholesteringehalt zu haben. Es wurde festgestellt, daß bei einem Anteil im Bereich von 6 bis 15% Oryzanol der Cholesteringehalt beim Verzehr üblicher Mengen an Margarinezubereitung signifikant abgesenkt werden kann und damit das Infarktrisiko um bis zu 40% gesenkt werden kann. Bevorzugt enthält daher die erfindungsgemäße Margarinezubereitung das Oryzanolpräparat in einer solchen Menge, daß in dem Produkt 5 bis 15%, besonders bevorzugt 6,5 bis 10 Gew.-% Oryzanol, bevorzugt γ-Oryzanol, vorhanden sind.

Der Zusatz von Tocotrienolen zu Sterinen hat einen zusätzlichen positiven Effekt auf den Cholesterinspiegel.

Ein weiterer wichtiger Bestandteil der erfindungsgemäßen Margarinezubereitung ist die Fettphase, deren Anteil in einem Bereich von 20 bis 60 Gew.-% liegen kann. Ein Fettgehalt von 60 Gew.-% ist der für eine Dreiviertelfett-Margarine gesetzliche vorgeschriebene und ein höherer Fettgehalt ist nicht sinnvoll, insbesondere da die Bestrebungen eher zu einer Absenkung des Fettverzehrs gehen. Eine Margarinezubereitung mit weniger als 20 Gew.-% Fett ist schwierig mikrobiologisch und physikalisch stabil zu halten und kann nicht ohne Konservierungsmittel hergestellt werden.

Aus gesundheitlichen Gründen ist eine Margarinezubereitung mit einem Fettgehalt im Bereich von 40 bis 20 Gew.-% bevorzugt, d.h. mit einem Fettgehalt, wie er für eine Dreiviertelfettmargarine, Halbfettmargarine oder Viertelfettmargarine gefordert wird. Besonders bevorzugt ist bei der erfindungsgemäßen Margarinezubereitung der Fettgehalt 40 Gew.-%.

Wie bei Margarine und Margarinezubereitungen üblich, wird die Fettphase aus einer Mischung von Fett und Öl gebildet, wobei die beiden Bestandteile in einem solchen Verhältnis eingesetzt werden, daß die gewünschte Konsistenz erreicht wird. Üblicherweise liegt das Verhältnis der beiden Bestandteile in einem Bereich von 2:1 bis 1:2.

Das für die Fettphase verwendete Fett kann jedes üblicherweise für Margarine und Margarinezubereitungen verwendete Fett sein, wobei erfindungsgemäß auf die Verwendung gehärteter Fette verzichtet werden kann. Bevorzugt werden daher ungehärtete Fette, die aus pflanzlichen Quellen stammen, verwendet. Besonders bevorzugt werden als Fett solche Komponenten eingesetzt, die auf Basis von Palmöl und Kokosfett kombiniert werden.

Der zweite Bestandteil der Fettphase ist ein Öl. Hier ist nahezu jedes pflanzliche Öl geeignet. Bevorzugt werden aufgrund ihrer neutralen Eigenschaften und der Verfügbarkeit Sonnenblumenöl, Rüböl und/oder Sojaöl (gegebenenfalls neben Reisschalenöl) verwendet. Vorteilhafterweise kann bei dem erfindungsgemäßen Produkt der Anteil an flüssigen Ölen höher sein, als sonst üblich. Er kann bis deutlich über 80%, bezogen auf den Gesamtfettanteil, liegen. Dadurch wird der Anteil an ungesättigten Fettsäuren im Fettanteil erhöht, was aus gesundheitlichen Gründen vorteilhaft ist.

Ein weiterer Hauptbestandteil der Margarinezubereitung ist Wasser. Die erfindungsgemäße Margarinezubereitung liegt in Form einer Wasser-in-Öl-Emulsion vor, wie es für eine Margarinezubereitung üblich ist. Es wurde gefunden, daß bei derartigen Emulsionen dann, wenn nicht mehr als 5 % der Wassertröpfchen, die von dem Fett umschlossen sind, eine Größe von 10 µm aufweisen, das Wasser für Mikroorganismen praktisch nicht mehr verfügbar ist. Es ist daher gerade bei Produkten mit reduziertem Fettgehalt bevorzugt, die Emulsion so herzustellen, daß mindestens 95 der Wassertröpfchen in der Emulsion eine Größe von < 10 µm haben. Besonders bevorzugt sind solche Emulsionen, bei denen außerdem mindestens 60 % der Wassertröpfchen eine Größe von 5 µm oder weniger, besonders bevorzugt < 3 µm, haben.

Die erfindungsgemäße Margarinezubereitung enthält außerdem ein Hydrokolloid, ausgewählt aus Pektin und/oder Derivaten davon, Carrageen, und/oder Derivaten davon, Alginsäure und/oder Derivaten davon oder deren Mischungen. Zusammen mit dem Oryzänolpräparat und/oder auch anderen Sterinen pflanzlichen Ursprungs bildet dieses Hydrokolloid ein neuartiges Stabilisatorsystem. Bei einer Margarinezubereitung mit einem Fettgehalt unter 60 Gew.-% ist es schwierig, die gewünschte Konsistenz nur durch die Mischung von Fett/Öl und Wasser zu erreichen. Bei einem Fettgehalt von 60 bis 40% ist es zwar möglich, eine streichfähige Konsistenz zu erreichen, die Stabilität ist jedoch nicht sehr groß und derartige Zubereitungen müssen auf jeden Fall gekühlt aufbewahrt werden, insbesondere wenn keine gehärteten Fette verwendet werden. Bei einem Fettgehalt unter 40 Gew.-% ist in jedem Fall eine Stabilisierung erforderlich. Häufig werden auch noch zusätzlich Verdickungs- und Geliermittel eingesetzt, die allerdings die mikrobiologische Stabilität beeinträchtigen können, da sie gute Nährstoffe für Mikroorganismen sind. Stabilisatoren und Verdickungsmittel, die gelierende Eigenschaften haben, können bei der Herstellung der Zubereitung zu Problemen führen, wenn sie zu früh aufsteifen.

In üblichen Margarinezubereitungen werden außerdem häufig Stärkeprodukte als Hydrokolloid eingesetzt. Diese sind jedoch nur für Margarinezubereitungen mit einem pH-Wert im Bereich von ≥ 4,2 geeignet. Wenn man jedoch den pH unter einen Wert von 3,7 absenkt, wird Stärke abgebaut und kann ihre stabilisierende Funktion nicht mehr wahrnehmen.

Diese Schwierigkeiten werden bei der Magarinezubereitung der vorliegenden Erfindung überwunden, indem ein als Stabilisator geeignetes Hydrokolloid zugesetzt wird. Es wurde festgestellt, daß bei Verwendung eines geeigneten Hydrokolloids als Stabilisator die oben genannten Probleme nicht auftreten. Insbesondere ist es vorteilhaft, ein Hydrokolloid zu verwenden, das bei einem pH von ≤ 3,7, insbesondere ≤ 3,5 stabil ist, da dann der pH-Wert der Zubereitung auf diesen Wert abgesenkt werden kann. Bei einem pH-Wert der Margarinezubereitung von ≤3,5 kann auf den Zusatz von Konservierungsmitteln völlig verzichtet werden, selbst wenn der Fettgehalt unter 60 Gew.-% liegt. Dies ist vorteilhaft, da die Verbraucher großen Wert auf nicht mit Konservierungsmitteln versehene Lebensmittelprodukte legen.

Als Hydrokolloide werden daher erfindungsgemäß Pektine und deren Derivate, Carrageene und deren Derivate sowie Alginsäuren und deren Derivate sowie Mischungen davon verwendet. Diese Substanzklassen sind im Rahmen der beschriebenen Anwendung säurestabil und geeignet, der Zubereitung die gewünschte Konsistenz zu vermitteln. Darüber hinaus haben diese speziellen Hydrokolloide die Fähigkeit, das in der Margarinezubereitung vorhandene Wasser so zu binden, daß die Wasseraktivität gering ist, d.h. wenig Wasser für mikrobielle Reaktionen zur Verfügung steht. Dies trägt zur Haltbarkeit der erfindungsgemäßen Zubereitung bei. Besonders bevorzugt wird als Stabilisator Pektin oder ein Derivat davon eingesetzt. Der Stabilisator wird in der üblicherweise in solchen Zusammensetzungen verwendeten Menge verwendet. Bevorzugt ist eine Menge im Bereich von 0,5 bis 2, besonders bevorzugt 0,8 bis 1,5 Gew.-%, bezogen auf die fertige Zubereitung.

Wie oben ausgeführt, ist es vorgesehen den pH-Wert der Margarinezubereitung auf einen Wert unter 3,7, bevorzugt unter 3,5 einzustellen, da dann ein Befall bzw. Wachstum mit unerwünschten, insbesondere pathogenen Keimen verhindert wird. Der pH-Wert der erfindungsgemäßen Margarinezubereitung wird bevorzugt mit organischen Säuren eingestellt, insbesondere mit Citronensäure, Milchsäure, einem Puffersystem aus Milchsäure/Laktat oder deren Mischungen. Besonders bevorzugt werden Mischungen von Citronensäure und Milchsäure eingesetzt. Citronensäure und Milchsäure werden bevorzugt in einem Verhältnis von 4:1 bis 1:4 eingesetzt. Die Säure oder Säuremischung wird in einer Menge eingesetzt, die ausreicht, den gewünschten pH-Wert einzustellen.

Ein weiterer Zusatzstoff, der in Margarinezubereitungen üblicherweise enthalten ist, ist ein Emulgator oder eine Mischung von Emulgatoren, der/die dazu dienen die Wasser-in-Öl-Emulsion zu stabilisieren und auch bei längerer Lagerung eine Phasentrennung zu verhindern. Üblicherweise werden als Emulgatoren Monoglyceride und Diglyceride eingesetzt, häufig partiell verseifte Triglyceride, bei denen durch bekannte technologische Verfahren der Anteil an Monoglyceriden auf 90 bis 95% angereichert wurde. Der Säureanteil der Monoglyceride ist eine Mischung von üblichen Fettsäuren, insbesondere C₁₆-C₁₈-Fettsäuren. Weiterhin wird als Emulgator Lecithin, z.B. solches, das aus Soja gewonnen wird, eingesetzt. Die für die erfindungsgemäße Margarinezubereitung verwendete Menge an Emulgator oder Emulgatorenmischung liegt in dem Bereich, der üblicherweise für Margarinen und Margarinezubereitungen verwendet wird. Bevorzugt werden Emulgatoren in einer Menge von 0,1 bis 1 Gew.-% verwendet.

Weiterhin kann die erfindungsgemäße Margarinezubereitung Vitamine, insbesondere die Vitamine A, B, D und E enthalten, die in den üblicherweise verwendeten und lebensmittelrechtlich vorgeschriebenen Mengen eingesetzt werden. Besonders bevorzugt sind Tocopherole in der erfindungsgemäßen Zubereitung enthalten, die gleichzeitig als Antioxidantien dienen und zwar sowohl bei der Lagerung der Margarinezubereitung als auch später im Organismus, um die im Körper beim Fettabbau gebildeten Peroxidradikale abzufangen.

Die erfindungsgemäße Margarinezubereitung kann darüber hinaus Farbstoffe, z.B. β-Carotin, und Aromastoffe, wie Diacetyl, Buttersäure oder Lactone, insbesondere natürliche Aromen, in geringen Mengen enthalten. Zur Abrundung des Geschmacks enthält die Margarinezubereitung in der Regel außerdem Kochsalz, bevorzugt in einer Menge im Bereich von 0,1 bis 0,5 Gew.-%.

Wenn ein Margarineerzeugnis einen Fettgehalt unter 60 Gew.-% aufweist, wie er erfindungsgemäß bevorzugt ist, gibt es wie oben ausgeführt, bei der Herstellung Probleme mit der mikrobiologischen Anfälligkeit der Endprodukte, die hauptsächlich durch die wäßrige Phase entstehen. Bei bekannten Verfahren werden in der Regel die wasserlöslichen Bestandteile in Wasser gelöst und dann, im Rahmen der Herstellung der Voremulsion, der Fettphase, die die fettlöslichen Zusatzstoffe enthält, zugegeben. Da die wäßrige Phase in der Regel in einem Temperaturbereich von 25°C bis 50°C verarbeitet wird, wird Mikroorganismen hier ein idealer Nährboden zur Verfügung gestellt. Um dies zu verhindern, werden stabilisierende, sterilisierende Maßnahmen eingesetzt, üblicherweise entweder durch den Zusatz von Konvervierungsmitteln oder die Durchführung von keimreduzierenden Stufen, die mit wirtschaftlichen und sensorischen Nachteilen verbunden sind. Bei der Verwendung gelierender Stabilisatoren oder Verdickungsmittel kommt noch das Problem einer vorzeitigen Gelierung in wäßriger Lösung hinzu.

Weiterhin ist mit den bekannten Verfahren nicht möglich, höhere, physiologisch wertvolle Anteile von sterin-, im besonderen oryzanolhaltigen Präparaten, die erfindungsgemäß bevorzugt sind, mir relativ geringem Aufwand in Emulsionsfette einzuarbeiten.

Diese Probleme werden überwunden mit dem erfindungsgemäßen Verfahren, mit dem ohne Verwendung von keimreduzierenden Maßnahmen in einfacher Weise ein mikrobiologisch stabiles Produkt, auch mit hohem Oryzanolgehalt, erzeugt werden kann.

Ein weiterer Gegenstand der Erfindung ist daher ein Verfahren zur Herstellung einer Margarinezubereitung, die Fett, Wasser, Hydrokolloid, übliche Zusatzstoffe und bevorzugt eine cholesterinsenkende Komponente enthält, das dadurch gekennzeichnet ist, daß die Zusatzstoffe und gegebenenfalls das cholesterinsenkende Mittel der Fettphase oder einem Teil davon zugesetzt werden, unter Anwendung hoher Scherkräfte eine Dispersion erzeugt wird, gegebenenfalls der Rest der Fettphase zugesetzt wird und, gegebenenfalls nach einem Konditionierungsschritt, der Dispersion Wasser zugegeben wird, um eine Wasser-in-Öl-Emulsion zu bilden.

Es wurde festgestellt, daß es mit dem erfindungsgemäßen Verfahren möglich ist, eine sowohl physikalisch als auch mikrobiologisch stabile Margarinezubereitung herzustellen. Dies gelingt überraschenderweise dadurch, daß zuerst eine Dispersion aller Inhaltsstoffe, sowohl der fettlöslichen als auch der Hydrokolloide und gegebenenfalls anderen wasserlöslichen Komponenten in Fett und/oder Öl hergestellt wird, diese Dispersion konditioniert wird, und anschließend der Dispersion Wasser zugegeben wird, um die Emulsion zu bilden. Falls zur Geschmacksabrundung Kochsalz oder Citronensäure verwendet werden, können diese in Wasser gelöst zugegeben werden, da eine saure oder wäßrige Kochsalzlösung das Keimwachstum nicht fördert. Besonders geeignet ist dieses Verfahren für Margarinezubereitungen mit einem Fettgehalt von ≤ 60 Gew.-%.

In einer bevorzugten Ausführungsform wird zuerst ein Teil der Fettphase, insbesondere der Ölanteil, vorgelegt und diesem die einzusetzenden Zusatzstoffe zugegeben. Im Gegensatz zu den bisher bekannten Verfahren, werden dem Öl nicht nur die fettlöslichen Zusatzstoffe, wie die Vitamine A, B, D und E, sowie gegebenenfalls das oryzanolhaltige Präparat und die Emulgatoren, sondern auch die wasserlöslichen Bestandteile, wie der Stabilisator, zugesetzt. Diese Mischung wird dann unter Einsatz von Hochleistungsmischern, z.B. Homogenisatoren oder statischen Mischern, zu einer homogenen Dispersion verarbeitet. Anschließend wird der Rest der Fettphase zugegeben. Bevorzugt wird diese homogene Dispersion dann zur Stabilisierung über einen Zeitraum, der im Bereich von 1 Minute bis 60 Minuten liegt, Scherkräften ausgesetzt. Der Dispersion wird dann die Wasserphase, die außer gegebenenfalls Kochsalz und Citronensäure keine weiteren Inhaltsstoffe enthält, zugemischt. Auf diese Art und Weise wird eine stabile und haltbare Wasser-in-Öl-Emulsion erhalten.

Da es, wie oben ausgeführt, für die Haltbarkeit der Emulsion vorteilhaft ist, wenn die Größe der von Fett umhüllten Wassertröpfchen 10 µm nicht übersteigt, insbesondere wenn 60 % der Wassertröpfchen eine Größe von ≤ 5 µm haben, ist es bevorzugt, die Emulsion so lange zu konditionieren, bis die Tröpfchen eine entsprechende Größe erreicht haben.

Das erhaltene Produkt ist sehr stabil und kann über längere Zeiträume ohne Phasentrennung gelagert werden.

Ein zusätzlicher Vorteil des erfindungsgemäßen Verfahrens ist es, daß die Stufen im wesentlichen ohne Erwärmung bei Raumtemperatur bzw. nur leicht erhöhter Temperatur durchgeführt werden können.

In einer besonders bevorzugten Ausführungsform werden zuerst die Zusatzstoffe, wie Stabilisator, Emulgator, Vitamine, Farb- und Aromastoffe sowie ein oryzanolhaltiges Präparat in dem Ölanteil der Fettphase unter Verwendung von starken Scherkräften dispergiert. Dabei erwärmt sich die Mischung auf ca. 40 bis 45°C. Gleichzeitig wird der Fettanteil bei einer Temperatur von 40 bis 50°C aufgeschmolzen. Beide Anteile werden dann zusammengemischt und zu einer homogenen Dispersion verarbeitet. Anschließend wird nach und nach das Wasser zugegeben unter Bildung einer Emulsion, die solange gerührt wird, bis die Voremulsion, gegebenenfalls unter Einbeziehung eines Konditionierungsschrittes den erforderlichen Aufbau aufweist.

Überraschenderweise ist es auch möglich, die für die erfindungsgemäße Zubereitung verwendete Sterindispersion in Wasser unter schonenden Bedingungen herzustellen. Diese Dispersion kann dann zur Herstellung der emulgierten Zubereitung verwendet werden.

Ein weiterer Gegenstand der Erfindung ist daher ein Verfahren zur Herstellung einer Margarinezubereitung, die Fett, Wasser, Hydrokolloid, übliche Zusatzstoffe und eine pflanzliche Sterin-Komponente enthält, bei dem Hydrokolloid und Sterin-Komponente in Wasser mit einer Temperatur von 5 bis 20°C unter Anwendung hoher Scherkräfte dispergiert werden, der Dispersion die Fettphase zugesetzt wird und, gegebenenfalls nach einem Konditionierungsschritt, eine Wasser-in-Öl-Emulsion gebildet wird.

Es wurde herausgefunden, daß es möglich ist, unter Anwendung hoher Scherkräfte oryzanolhaltige Präparate, aber auch andere pflanzliche Sterin-Komponenten, und Hydrokolloid bei niedriger Temperatur in Wasser zu dispergieren bzw. kolloidal zu verteilen. Bei bisher bekannten Verfahren zur Herstellung von sterinhaltigen Fettprodukten, z.B. dem aus EP-A 897 970 bekannten, war es notwendig, die Sterinkomponente nach Schmelze bei 150°C in der Fettphase unter Anwendung von Emulgatoren zu dispergieren bzw. kolloidal zu verteilen. Die Erfinder der vorliegenden Erfindung fanden nun, dass es möglich ist, pflanzliche Sterine, wie oryzanolhaltige Präparate, in kalten Wasser ohne Emulgatoren zu dispergieren. Dies ist sehr vorteilhaft, da bei niedriger Temperatur keine oxidativen oder hydrolytischen Effekte auftreten, und dazu bei diesen niedrigen Temperaturen das Keimwachstum reduziert ist und daher die mikrobiologische Stabilität erhalten bleibt. Überraschenderweise wurde festgestellt, daß für die Verfahrensstufe der Dispergierung kein Emulgator notwendig ist, sondern daß sich Kombinationen aus Hydrokolloid und Sterin-Komponente nur durch Anwendung hoher Scherkräfte gut aufschließen lassen. Die dabei erhaltene Dispersion kann dann in üblicher Weise, gegebenenfalls nach einer Konditionierung, unter Zugabe von Fett und weiteren Zusatzstoffen zu einer stabilen Wasser-in-Öl-Emulsion weiter verarbeitet werden.

Die weiteren Inhaltsstoffe der Zubereitung werden dann entweder vor der Fettphase der Dispersion zugegeben und mit dieser vermischt oder zusammen mit der Fettphase zugefügt.

Erfindungsgemäß wird somit ein Verfahren offenbart, mit dem jede Art von Margarine und besonders vorteilhaft Margarine mit deutlich reduziertem Fettgehalt und hohem Gehalt an Oryzanol und/oder anderen pflanzlichen Sterinen hergestellt werden kann.

Durch Verwendung eines Hydrokolloids in Kombination mit einem oryzanolhaltigen Präparat oder anderen Phytosterinen, z.B. handelsüblichen Sitosterinen zur Stabilisierung der erfindungsgemäßen Zubereitung wird die Stabilität, insbesondere die thermische Stabilität soweit erhöht, daß das Produkt Lagertemperaturen bis zu 30°C ohne nachteilige Veränderung über längere Zeiträume aushält. Da durch das erfindungsgemäß verwendete Stabilisatorsystem der pH Wert in einem Bereich unter 3,7 liegen kann, ist das Produkt darüber hinaus auch ohne Verwendung von Konservierungsmitteln noch bei erhöhten Lagertemperaturen bis zu 30°C mikrobiologisch stabil.

Weiterhin wird durch die Verwendung von pflanzliche Sterinpräparaten wie auch einigen anderen sekundaren Pflanzeninhaltsstoffen, die Oxidationsstabilität von Fettzubereitungen nachhaltig verbessert, bedingt durch deren antioxidatives Potential.

Weiterhin wurde gefunden, dass die Kombination von pflanzlichen Sterinen, z.B. Oryzanol, und Hydrokolloiden, insbesondere Pektine und deren Derivate, Carrageene und deren Derivate sowie Alginsäuren und deren Derivate, fetthaltige Massen thermisch und mikrobiologisch stabilisiert. Wie oben ausgeführt, werden unter Verwendung dieses Stabilisatorsystems überraschend Produkte erhalten, die auch bei erhöhter Lagertemperatur, sogar bis zu 30°C, stabil bleiben.

Ein weiterer Gegenstand der Erfindung ist daher die Verwendung einer Kombination aus einem Hydrokolloid, das ausgewählt ist aus Pektin und/oder Derivaten davon, Carrageen und/oder Derivaten davon, Alginsäure und/oder Derivaten davon oder deren Mischungen, und natürlichen, pflanzlichen Sterin-Komponenten zur Stabilisierung einer streichfähigen WO-Emulsion mit einem Fettgehalt von 20 bis 60, bevorzugt 20 bis 45 Gew.-%.

Bevorzugt wird als Sterinkomponente Oryzanol gegebenenfalls mit einem geringen zusätzlichen Anteil von 0,1 bis 1 % anderer Sterine verwendet. In einer bevorzugten Ausführungsform wird als Stabilisatorsystem eine Dispersion aus Sterin, Hydrokolloid und Wasser eingesetzt. Diese Dispersion kann, wie oben ausgeführt, hergestellt werden, indem die drei Komponenten unter Anwendung hoher Scherkräfte bei niedriger Temperatur vermischt werden.

Das erfindungsgemäße Stabilisatorsystem eignet sich zur Stabilisierung vieler Formulierungen von Emulsionsfetten, insbesondere zur Stabilisierung von Aufstrichen und margarineartigen Produkten.

Die Erfindung wird durch die folgenden Beispiele weiter erläutert.

### Beispiel 1

Es wurde eine Margarinezubereitung hergestellt auf Basis von 60 kg Sonnenblumenöl und 200 kg eines ungehärteten Laurics/ Palmitics-Umesterungsprodukts aus Kokosfett und Palmölfraktionen, wie es kommerziell jederzeit verfügbar ist.

Als Oryzanolkomponente wurden 170 kg von mit Unverseifbarem angereichertem Reisschalenöl verwendet, das Oryzanol in einer Menge von ca. 70 kg enthielt. In einer ersten Stufe wurde das Oryzanol dem Öl zugegeben und in einem Hochleistungsmischer homogenisiert. Anschließend wurden in der bei einer Temperatur von ca. 45 °C aufgeschmolzenen obigen Fettmischung die weiteren genannten Zutaten dispergiert, dieses der Oryzanol-Öl-Dispersion zugesetzt und wiederum homogenisiert. Die gesamte Mischung wurde dann ca. 10 Minuten lang gerührt. Dabei wurde eine stabile Dispersion erhalten. Dieser Dispersion wurden dann 540 kg Wasser langsam zugesetzt unter Bildung einer Wasser-in-Öl-Emulsion. Diese Emulsion wurde solange gerührt, bis die Tröpfchengröße aller Wassertröpfchen unter 10 µm war.

Das dann nach üblichen Verfahren der Margarinetechnologie hergestellte Endprodukt war sehr gut streichfähig und die sensorischen Eigenschaften wurden als sehr befriedigend eingestuft. Das Mundgefühl wurde insgesamt positiv bewertet; das Emulsionsfett wies gute Stabilitätskennzahlen auf.

### Beispiel 2

Es wurde eine Margarinezubereitung hergestellt auf Basis von 260 kg Sonnenblumenöl und 100 kg eines ungehärteten Laurics/Palmitics-Umesterungsprodukts aus Kokosfett und Palmölfraktionen, wie es kommerziell jederzeit verfügbar ist.
Als Sterinkomponenten wurden neben 5 kg Standardsitosterin 70 kg Oryzanol verwendet. In einer ersten Stufe wurden Oryzanol und Sterin in 300 kg Wasser von 10°C gegeben und in einem Hochleistungsmischer homogenisiert. Anschließend wurden in der bei einer Temperatur von ca. 45°C aufgeschmolzenen obigen Fettmischung übliche Emulgatoren und weitere Zutaten dispergiert, die Sterin-Wasser-Dispersion zugesetzt und wiederum homogenisiert. Die gesamte Emulsion wurde dann ca. 10 Minuten lang bei 40°C gerührt. Dabei wurde eine stabile Emulsion erhalten. Dieser wurden dann 260 kg Wasser langsam zugesetzt unter Bildung einer Wasser-in-Öl-Emulsion. Diese Emulsion wurde solange gerührt, bis die Tröpfchengröße aller Wassertröpfchen unter 10 *µ*m war.

Das dann nach üblichen Verfahren der Margarinetechnologie hergestellte Endprodukt war sehr gut streichfähig und die sensorischen Eigenschaften wurden als sehr befriedigend eingestuft. Das Mundgefühl wurde insgesamt positiv bewertet, das Emulsionsfett wies gute Stabilitätskennzahlen auf.

## Patentansprüche

1. Stabile Margarinezubereitung enthaltend 20 bis 60 Gew.-% Fett, Wasser, ein Hydrokolloid ausgewählt aus Pektin und/oder Derivaten davon, Carrageen, und/oder Derivaten davon, Alginsäure und/oder Derivaten davon oder deren Mischungen, übliche Zusatzstoffe und zusätzlich ein oryzanolhaltiges und/oder andere Phytosterine enthaltendes Präparat, wobei die Zubereitung einen pH-Wert kleiner 3,7 aufweist.

2. Margarinezubereitung nach Anspruch 1, **dadurch gekennzeichnet, daß** bezogen auf das Gewicht der Zubereitung 1 bis 15, bevorzugt 5-15 Gew.-% γ-Oryzanol enthalten sind.

3. Margarinezubereitung nach einem der vorhergehenden Ansprüche, **dadurch gekennzeichnet, daß** sie 20 bis 40 Gew.-% Fett enthält.

4. Margarinezubereitung nach einem der vorhergehenden Ansprüche, **dadurch gekennzeichnet, daß** sie als Hydrokolloid Pektin und/oder Derivate davon enthält.

5. Margarinezubereitung nach einem der vorhergehenden Ansprüche **dadurch gekennzeichnet, daß** sie ≤ 40 % Fett enthält und ohne Verwendung von Konservierungsmitteln mikrobiologisch stabil ist.

6. Margarinezubereitung nach einem der vorhergehenden Ansprüche, **dadurch gekennzeichnet, daß** sie in Form einer Emulsion vorliegt, bei der mehr als 60 % der Wassertröpfchen eine Größe < 5 µm haben.

7. Verfahren zur Herstellung einer stabilen Margarinezubereitung mit einem pH-Wert kleiner 3,7, die 20 bis 60 Gew.% Fett, Wasser, ein Hydrokolloid ausgewählt aus Pektin und/oder Derivaten davon, Carrageen und/oder Derivaten davon, Alginsäure und/oder Derivaten davon oder deren Mischungen, übliche Zusatzstoffe und ein sterinhaltiges, bevorzugt oryzanolhaltiges Präparat und/oder Tocotrienole enthält, **dadurch gekennzeichnet, dass** Hydrokollodide, Zusatzstoffe und sterinhaltiges Präparat und/oder Tocotrienole der Fettphase oder einem Teil davon zugesetzt werden, eine Dispersion in Öl oder Fett erzeugt wird unter Anwendung hoher Scherkräfte, die Dispersion gegebenenfalls zur Stabilisierung konditioniert wird, der Dispersion Wasser zugegeben wird und, gegebenenfalls nach einem Konditionierungsschritt, eine Wasser-in-Öl-Emulsion gebildet wird.

8. Verfahren zur Herstellung einer stabilen Margarinezubereitung mit einem pH-Wert kleiner 3,7, die 20 bis 60 Gew.% Fett, Wasser, ein Hydrokolloid ausgewählt aus Pektin und/oder Derivaten davon, Carrageen und/oder Derivaten davon, Alginsäure und/oder Derivaten davon oder deren Mischungen, pflanzliche Sterin-Komponenten und übliche Zusatzstoffe enthält, bei dem das Hydrokolloid oder die Mischung von Hydrokolloiden und die Sterin-Komponenten unter Anwendung hoher Scherkräfte in Wasser bei einer Temperatur von 5 bis 20 C° dispergiert werden, der Dispersion Fett und übliche Zusatzstoffe zugegeben werden, und, gegebenenfalls nach einem Konditionierungsschritt, eine Wasser-in-Öl-Emulsion gebildet wird.

9. Verfahren nach Anspruch 7 oder Anspruch 8, **dadurch gekennzeichnet, daß** die Fettphase ≤60 Gew.-%, bevorzugt ≤ 40 Gew.-%, der Zubereitung bildet.

10. Verfahren nach einem der Ansprüche 7 bis 9, **dadurch gekennzeichnet, daß** der Fettphase ein oryzanolhaltiges Präparat und/oder Tocotrienole zugegeben werden.

11. Verfahren nach einem der Ansprüche 7 bis 10, **dadurch gekennzeichnet, daß** der pH-Wert der Emulsion auf einen Wert von ≤ 3,7, bevorzugt s 3,5, durch Zugabe einer oder mehrerer Genußsäure eingestellt wird.

12. Verfahren nach einem der Ansprüche 7 bis 11, **dadurch gekennzeichnet, daß** die Emulsion so konditioniert wird, daß 95 % der Wassertröpfchen eine Größe < 10µm haben und bevorzugt mindestens 60 % der Wassertröpfchen eine Größe von ≤ 5 µm haben.

13. Verwendung einer Kombination aus einem Hydrokolloid, das ausgewählt ist aus Pektin und/oder Derivaten davon, Carrageen und/oder Derivaten davon, Alginsäure und/oder Derivaten davon oder deren Mischungen, und natürlichen, pflanzlichen Sterin-Komponenten zur Stabilisierung einer streichfähigen WO-Emulsion mit einem Fettgehalt von 20 bis 60, bevorzugt 20 bis 45 Gew.-%.

14. Verwendung nach Anspruch 13, **dadurch gekennzeichnet, daß** als natürliche, pflanzliche Sterin-Komponente ein oryzanolhaltiges Präparat verwendet wird.

## Claims

1. A stable margarine composition containing 20 to 60 wt.% fat, water, a hydrocolloid selected from pectin and/or derivatives thereof, carrageenan and/or derivatives thereof, alginic acid and/or derivatives thereof or mixtures thereof, conventional additives and additionally a preparation containing oryzanol and/or other phytosterols, the composition exhibiting a pH value of less than 3.7.

2. A margarine composition according to claim 1, **characterised in that**, relative to the weight of the composition, 1 to 15, preferably 5-15 wt.% of γ-oryzanol are present.

3. A margarine composition according to any one of the preceding claims, **characterised in that** it contains 20 to 40 wt.% fat.

4. A margarine composition according to any one of the preceding claims, **characterised in that** it contains pectin and/or derivatives thereof as the hydrocolloid.

5. A margarine composition according to any one of the preceding claims, **characterised in that** it contains ≤ 40% fat and is microbiologically stable without the use of preservatives.

6. A margarine composition according to any one of the preceding claims, **characterised in that** it assumes the form of an emulsion in which more than 60% of the water droplets have a size of < 5 µm.

7. A process for the production of a stable margarine composition having a pH value of less than 3.7 which contains 20 to 60 wt.% fat, water, a hydrocolloid selected from among pectin and/or derivatives thereof, carrageenan and/or derivatives thereof, alginic acid and/or derivatives thereof or mixtures thereof, conventional additives and a sterol-containing, preferably oryzanol-containing, preparation and/or tocotrienols, **characterised in that** hydrocolloids, additives and sterol-containing preparation and/or tocotrienols are added to the fatty phase or a proportion thereof, a dispersion is produced in oil or fat using elevated shear forces, the dispersion is optionally conditioned for stabilisation, water is added to the dispersion and, optionally after a conditioning step, a water-in-oil emulsion is formed.

8. A process for the production of a stable margarine composition having a pH value of less than 3.7 which contains 20 to 60 wt.% fat, water, a hydrocolloid selected from among pectin and/or derivatives thereof, carrageenan and/or derivatives thereof, alginic acid and/or derivatives thereof or mixtures thereof, plant sterol components and conventional additives, in which the hydrocolloid or the mixture of hydrocolloids and the sterol components are dispersed in water at a temperature of 5 to 20°C using elevated shear forces, fat and conventional additives are added to the dispersion and, optionally after a conditioning step, a water-in-oil emulsion is formed.

9. A process according to claim 7 or claim 8, **characterised in that** the fat phase forms ≤ 60 wt.%, preferably ≤ 40 wt.%, of the composition.

10. A process according to any one of claims 7 to 9, **characterised in that** an oryzanol-containing preparation and/or tocotrienols are added to the fat phase.

11. A process according to any one of claims 7 to 10, **characterised in that** the pH value of the emulsion is adjusted to a value of ≤ 3.7, preferably of ≤ 3.5, by addition of one or more edible acids.

12. A process according to any one of claims 7 to 11, **characterised in that** the emulsion is conditioned in such a manner that 95% of the water droplets have a size of < 10 µm and preferably at least 60% of the water droplets have a size of ≤ 5 µm.

13. Use of a combination of a hydrocolloid, which is selected from among pectin and/or derivatives thereof, carrageenan and/or derivatives thereof, alginic acid and/or derivatives thereof or mixtures thereof, and natural, plant sterol components for stabilising a spreadable water-in-oil emulsion having a fat content of 20 to 60, preferably 20 to 45 wt.%.

14. Use according to claim 13, **characterised in that** a preparation containing oryzanol is used as the natural, plant sterol component.

## Revendications

1. Préparation de margarine stable comprenant 20 à 60 % en poids de matière grasse, de l'eau, un hydrocolloïde choisi parmi la pectine et/ou ses dérivés, du carragheen et/ou ses dérivés, l'acide alginique et/ou ses dérivés, ou leurs mélanges, des additifs conventionnels et, en outre, une préparation à base d'oryzanol et/ou une préparation contenant d'autres phytostérols, la préparation présentant un pH inférieur à 3,7.

2. Préparation de margarine selon la revendication 1, **caractérisée en ce qu'**elle comprend 1 à 15, de préférence 5 à 15 % en poids de γ-oryzanol, par rapport au poids de la préparation.

3. Préparation de margarine selon l'une des revendications précédentes, **caractérisée en ce qu'**elle contient 20 à 40 % de matière grasse.

4. Préparation de margarine selon l'une des revendications précédentes, **caractérisée en ce qu'**elle contient de la pectine et/ou ses dérivés en tant qu'hydrocolloïde.

5. Préparation de margarine selon l'une des revendications précédentes, **caractérisée en ce qu'**elle contient une quantité de matière grasse égale ou inférieure à 40 % et qu'elle est stable sur le plan microbiologique sans utiliser de conservateurs.

6. Préparation de margarine selon l'une des revendications précédentes, **caractérisée en ce qu'**elle se présente sous la forme d'une émulsion, dans laquelle plus de 60 % des gouttelettes d'eau présentent un diamètre inférieur à 5 µm.

7. Procédé de fabrication d'une préparation de margarine stable comprenant 20 à 60 % en poids de matière grasse, de l'eau, un hydrocolloïde choisi parmi la pectine et/ou ses dérivés, du carragheen et/ou ses dérivés, l'acide alginique et/ou ses dérivés, ou leurs mélanges, des additifs conventionnels et une préparation à base de stérol, de préférence à base d'oryzanol et/ou des tocotriénols, **caractérisé en ce que** les hydrocolloïdes, les additifs et la préparation à base de stérol et/ou les tocotriénols sont ajoutés à la phase grasse ou à une partie de celle-ci, **en ce qu'**une dispersion dans l'huile ou dans la matière grasse est produite en appliquant des forces de cisaillement élevées, **en ce que** la dispersion est éventuellement conditionnée afin de la stabiliser, **en ce que** de l'eau est ajoutée à la dispersion et, éventuellement après une étape de conditionnement, **en ce qu'**une émulsion eau-dans-huile est formée.

8. Procédé de fabrication d'une préparation de margarine stable, au pH inférieur à 3,7 et comprenant 20 à 60 % en poids de matière grasse, de l'eau, un hydrocolloïde choisi parmi la pectine et/ou ses dérivés, du carragheen et/ou ses dérivés, l'acide alginique et/ou ses dérivés, ou leurs mélanges, des composants de stérol d'origine végétale et des additifs conventionnels, dans lequel l'hydrocolloïde ou le mélange d'hydrocolloïdes et les composants de stérol sont dispersés dans de l'eau à une température comprise entre 5 et 20 °C en appliquant des forces de cisaillement élevées, dans lequel l'on ajoute à la dispersion la matière grasse et les additifs conventionnels, et dans lequel, éventuellement après une étape de conditionnement, une émulsion eau-dans-huile est formée.

9. Procédé selon la revendication 7 ou 8, **caractérisé en ce que** la phase grasse représente 60 % en poids ou moins, de préférence 40 % en poids ou moins de la préparation.

10. Procédé selon l'une des revendications 7 à 9, **caractérisé en ce que** l'on ajoute à la phase grasse une préparation à base d'oryzanol et/ou des tocotriénols.

11. Procédé selon l'une des revendications 7 à 10, **caractérisé en ce que** le pH de l'émulsion est ajusté à une valeur inférieure ou égale à 3,7, de préférence inférieure ou égale à 3,5, par adjonction d'un ou de plusieurs acide(s) à usage alimentaire.

12. Procédé selon l'une des revendications 7 à 11, **caractérisé en ce que** l'émulsion est conditionnée de telle sorte que 95 % des gouttelettes d'eau présentent un diamètre inférieur à 10 µm et de préférence au moins 60 % des gouttelettes d'eau présentent un diamètre inférieur ou égal à 5 µm.

13. Utilisation d'une combinaison constituée d'un hydrocolloïde choisi parmi la pectine et/ou ses dérivés, du carragheen et/ou ses dérivés, l'acide alginique et/ou ses dérivés, ou leurs mélanges, et de composants de stérol naturels d'origine végétale, pour stabiliser une émulsion eau-dans-huile tartinable, présentant une teneur en matière grasse comprise entre 20 et 60, de préférence entre 20 et 45 % en poids.

14. Utilisation selon la revendication 13, **caractérisée en ce que** l'on utilise en guise de composants de stérols naturels, d'origine végétale, une préparation à base d'oryzanol.
